(19) Europäisches Patentamt
European Patent Office
Office européen des brevets

(11) EP 4 651 238 A1

(12) EUROPEAN PATENT APPLICATION
published in accordance with Art. 153(4) EPC

(43) Date of publication:
**19.11.2025 Bulletin 2025/47**

(21) Application number: **24741585.4**

(22) Date of filing: **12.01.2024**

(51) International Patent Classification (IPC):
***H01M 4/62*** *(2006.01)* ***H01M 4/139*** *(2010.01)*

(52) Cooperative Patent Classification (CPC):
**H01M 4/139; H01M 4/62;** Y02E 60/10

(86) International application number:
**PCT/JP2024/000559**

(87) International publication number:
**WO 2024/150813 (18.07.2024 Gazette 2024/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.01.2023 JP 2023003544**
**27.07.2023 JP 2023122099**

(71) Applicant: **Nissan Chemical Corporation**
**Tokyo 103-6119 (JP)**

(72) Inventors:
- **HATANAKA Tatsuya**
  **Funabashi-shi, Chiba 274-0052 (JP)**
- **IKEDA Takumi**
  **Funabashi-shi, Chiba 274-0052 (JP)**

(74) Representative: **Müller-Boré & Partner**
**Patentanwälte PartG mbB**
**Friedenheimer Brücke 21**
**80639 München (DE)**

# (54) COMPOSITION FOR ELECTRODE FORMATION AND ADDITIVE

(57) The present invention provides, as a composition for electrode formation having improved storage stability and higher solid content concentration, while suppressing thickening and gelation by a simple method, a composition for electrode formation, the composition containing a stabilization component, a positive electrode active material, a binder and a solvent, wherein the stabilization component contains: (first component) a heterocycle-containing compound which has a reactive group and a nitrogen-containing five-membered ring without containing an oxygen atom in the nitrogen-containing five-membered ring, and (second component) a compound which is chemically reactive with the heterocycle-containing compound; the first component, the second component, and a reaction product that is obtained by having the first component and the second component react with each other; or the reaction product that is obtained by having the first component and the second component react with each other.

## Description

### TECHNICAL FIELD

The present invention relates to an electrode-forming composition and to an additive.

### BACKGROUND ART

Lithium-ion secondary batteries, because of their high energy density per unit weight and volume, are contributing to reductions in the size and weight of built-in electronic devices. In recent years, with the accelerating adoption of electric cars in the drive toward automotive zero emissions, there is a desire for even lower battery resistance, longer life, higher capacity, better safety and lower cost.

Lithium-ion batteries generally have a three-layer construction --positive electrode/separator/negative electrode-- that includes an electrolyte solution. The positive and negative electrodes are produced by coating a current collector with an electrode slurry prepared by mixing together, for example, an active material, a conductive material and a binder. The method most commonly used today for producing negative electrodes involves applying a negative electrode slurry onto copper foil as the current collector, and drying the applied slurry. The method most commonly used for producing positive electrodes involves preparing a positive electrode slurry using as the solvent an organic solvent such as N-methyl-2-pyrrolidone, and coating the slurry onto aluminum foil as the current collector.

Inorganic compounds such as alkali metal-containing transition metal oxides and transition metal chalcogens are known as positive electrode active materials for lithium-ion secondary batteries which are capable of achieving a battery voltage of about 4 V. Of these, highly alkaline positive electrode active materials containing much nickel or manganese are used for the purpose of obtaining high-capacity lithium-ion secondary batteries.

For example, high-nickel positive electrode active materials such as $Li_xNiO_2$ have a high discharge capacity and are thus attractive positive electrode materials. However, the alkaline constituents LiOH, $Li_2O$, $LiHCO_3$ and $Li_2CO_3$ that form in proton exchange reactions of such high-nickel positive electrode active materials with starting material residues or moisture and in reactions with moisture or carbon dioxide in the air are present on the surface.

A problem that arises with the use of such a positive electrode active material is that the electrode slurry thickens or gels, gradually losing fluidity. When the electrode slurry loses fluidity, not only does it become difficult to obtain a uniform coating thickness, in some cases coating becomes impossible to carry out, resulting in a waste of material.

The chief cause of this is thought to be that, in the positive electrode production step, alkaline constituents present on the surface of the positive electrode active material promote, in the presence of a trace amount of moisture, dehydrofluorination reactions in fluorinated binders having a vinylidene fluoride structure, such as polyvinylidene fluoride (PVdF), that are used as the binder.

In addition, alkaline constituents increase the battery resistance by corroding the aluminum foil typically used as the positive electrode current-collecting foil. Also, there is a risk of the alkaline constituents reacting with the electrolyte solution within the battery, increasing the battery resistance and worsening the battery life.

Although such thickening and gelation can be suppressed by handling the starting materials and electrode slurry in a dry environment and controlling the moisture content, a large-scale facility is required for the series of mass-production operations from electrode slurry preparation to battery production. An additional problem is the increased cost and greater environmental impact resulting from the use of a large amount of electricity.

In order to resolve this problem, Patent Document 1 discloses art which suppresses electrode slurry gelation by carrying out the preparation of an electrode slurry (positive electrode material slurry) in such a way as not to exhibit strong alkalinity even when dispersed in water. However, in the method described in Patent Document 1, the preparation of an electrode slurry in such a way as not to exhibit strong alkalinity not only requires strict pH control, it also requires treatment which disperses a positive electrode active material in water, removes the positive electrode active material from the dispersion by filtration and then dries it. This results in operational complexity and decreased yield. Moreover, there is also a possibility of such treatment triggering a decrease in the performance of the positive electrode active material itself.

Patent Document 2 reports art which uses a compound such as ultrahigh-molecular-weight (weight-average molecular weight of 2,200,000 or more) polyethylene oxide that, through interactions with water (e.g., hydrogen bonding), binds the water, thereby suppressing reactions between the alkaline constituents of the positive electrode active material and water, and in turn suppressing thickening and gelation. However, with ultrahigh-molecular-weight polymers that have a strong thickening effect, uniform dissolution treatment in a solvent takes time and is costly, in addition to which handling is a challenge in that preparing a high-concentration solution of the polymer is difficult. Also, because the above-described ultrahigh-molecular-weight polymer has a high water-binding ability, there is a concern that the polymer itself may introduce water into the composition, and so rigorous control in preliminary drying is essential in order to prevent this.

Patent Document 3 (JP-A H09-306502) and Patent Document 4 (JP-A H10-79244) teach the addition of an organic acid or inorganic acid in order to suppress gelation of an electrode slurry (positive electrode mixture slurry) at the

positive electrode of a lithium-ion secondary battery. In Patent Document 3, maleic acid, citraconic acid and malonic acid are used in the electrode slurry (positive electrode paste). In Patent Document 4, acetic acid, phosphoric acid, sulfuric acid or the like is used in the positive electrode mixture. However, a large amount of addition is necessary to neutralize the alkali with acid. As a result, this may lead to a decrease in the energy density of the battery or an increase in the battery resistance. Another problem is that the acid corrodes the equipment used in electrode production. Furthermore, in this method, because the organic acid or inorganic acid has a high degree of acidity, a neutralization reaction with lithium ions in the active material ultimately arises, which may lead to deterioration of the battery performance.

Patent Document 5 discloses a method which can prevent gelation and also suppress gas evolution by using fluorine gas to treat the positive electrode active material and fixing the remaining LiOH as LiF. However, fluorine gas is highly toxic and difficult to handle, in addition to which the LiF that forms as a by-product increases the internal resistance of the battery, resulting in a decrease in the battery capacity. The capacity decreases also due to corrosion of the positive electrode active material by fluorine gas. Another problem is that residual fluorine reacts with trace moisture present in the active material and the electrolyte solution, forming hydrogen fluoride, which readily leads to cycle deterioration.

Patent Document 6 teaches that washing with a lithium salt-containing aqueous solution removes unreacted lithium hydroxide and impurities originating from the starting materials. However, the costs associated with the increased environmental impact of the wastewater generated during washing and with wastewater treatment pose a problem.

## PRIOR ART DOCUMENTS

### PATENT DOCUMENTS

Patent Document 1: JP-A 2000-90917

Patent Document 2: JP-A 2019-121471

Patent Document 3: JP-A H09-306502

Patent Document 4: JP-A H10-79244

Patent Document 5: JP-A 2006-286240

Patent Document 6: WO 2017/034001 A1

## SUMMARY OF INVENTION

### TECHNICAL PROBLEM

In light of such circumstances, an object of this invention is to provide an electrode-forming composition with which it is possible by a simple method to suppress thickening and gelation of an electrode slurry, improve shelf stability, increase the solids concentration and suppress battery deterioration. Another object of the invention is to provide an additive that is effective for suppressing the gelation of electrode-forming compositions.

### SOLUTION TO PROBLEM

The inventors have conducted intensive investigations in order to achieve the foregoing objects. As a result, they have discovered that by adding a stabilizing ingredient comprised of a specific heterocycle-containing compound (first constituent) and a compound which chemically reacts with this heterocycle-containing compound (second constituent) to an electrode slurry containing at least a positive electrode active material, a fluorinated binder and a solvent, thickening and gelation of the composition can be suppressed, enabling the shelf stability to be increased. Moreover, in an electrode produced using the electrode-forming composition of the invention, deterioration within a battery that is caused by alkaline constituents is suppressed, enabling the battery characteristics to be enhanced.

Accordingly, the invention provides the following electrode-forming compositions and additives.

1. An electrode-forming composition that includes a stabilizing ingredient, a positive electrode active material, a binder and a solvent, wherein the stabilizing ingredient comprises:

a heterocycle-containing compound which has a nitrogen-containing five-membered ring, does not include an oxygen atom in the nitrogen-containing five-membered ring and has a reactive group (first constituent) and a compound which chemically reacts with the heterocycle-containing compound (second constituent);
the first constituent, the second constituent and a product obtained by reaction of the first constituent with the second constituent; or
a product obtained by reaction of the first constituent with the second constituent.

2. The electrode-forming composition of 1 above, wherein heteroatoms included in the nitrogen-containing five-membered ring are nitrogen atoms only.
3. The electrode-forming composition of 2 above, wherein two or three nitrogen atoms are included in the nitrogen-containing five-membered ring.
4. The electrode-forming composition of any of 1 to 3 above, wherein the heterocycle-containing compound is represented by one of formulas (1) to (4) below

[Chem. 1]

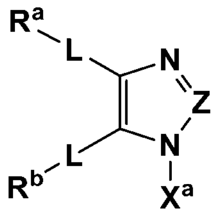

(1)

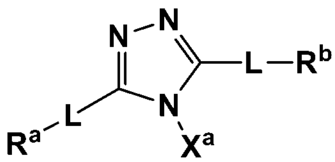

(2)

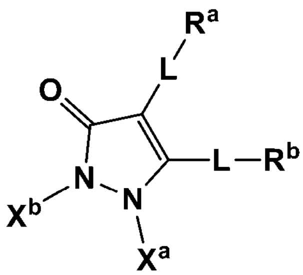

(3)

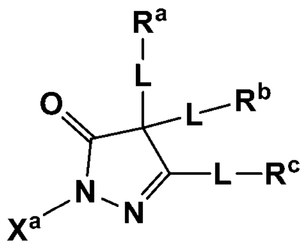

(4)

(wherein $R^a$ to $R^c$ are each independently a hydrogen atom, halogen atom, carboxyl group, hydroxyl group, thiol group, amino group, alkyl group of 1 to 6 carbon atoms which may have a substituent, alkenyl group of 2 to 6 carbon atoms which may have a substituent or aryl group of 6 to 12 carbon atoms which may have a substituent;

$R^a$ and $R^b$ may mutually bond to form a ring of 4 to 12 carbon atoms which may have a substituent;
each L is independently a single bond, carbonyl group, ether bond, ester bond or amide bond;
Z is nitrogen or C-L-$R^c$;
$X^a$ and $X^b$ are each independently a hydrogen atom, lithium atom, sodium atom, alkyl group of 1 to 6 carbon atoms which may have a substituent, aryl group of 6 to 12 carbon atoms which may have a substituent or $-CH_2NR^d{}_2$; and
$R^d$ is an alkyl group of 1 to 10 carbon atoms, alkanol group of 1 to 10 carbon atoms, alkenyl group of 2 to 10 carbon atoms or aryl group of 6 to 12 carbon atoms) and has on the molecule a reactive group for reacting with the second constituent.

5. The electrode-forming composition of 4 above, wherein the substituents on $R^a$, $R^b$, $R^c$, $X^a$ and $X^b$ are of at least one type selected from the group consisting of carboxyl, hydroxyl, aldehyde, ester, ketone, amino and phenyl groups, halogen atoms and alkoxysilyl, epoxy, carbonyl chloride and thiol groups.
6. The electrode-forming composition of 4 or 5 above, wherein the heterocycle-containing compound is a heterocycle-containing compound of formula (5) below

[Chem. 2]

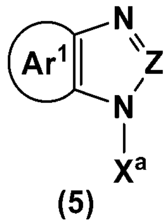

(5)

(wherein $Ar^1$ is an aromatic ring of 4 to 12 carbon atoms which may have a substituent or an aliphatic ring of 4 to 10 carbon atoms which may have a substituent; and Z and $X^a$ are the same as above).

7. The electrode-forming composition of 6 above, wherein the heterocycle-containing compound is a heterocycle-containing compound of formula (6) below

[Chem. 3]

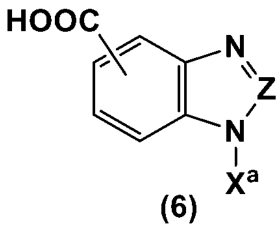

(6)

(wherein Z and $X^a$ are the same as above).

8. The electrode-forming composition of any of 4 to 7 above, wherein Z is nitrogen.

9. The electrode-forming composition of any of 1 to 8 above, wherein the second constituent is a compound having an oxazoline group, aldehyde group, carboxyl group, hydroxyl group, amino group, alkoxysilyl group, epoxy group or carbonyl chloride group; or is lithium hydroxide, sodium hydroxide, lithium bicarbonate or lithium carbonate.

10. The electrode-forming composition of any of 1 to 9 above, wherein the second constituent is lithium hydroxide, sodium hydroxide, a compound having a molecular weight of at least 200 or a polymer having a weight-average molecular weight of at least 1,000.

11. The electrode-forming composition of any of 1 to 10 above, wherein the product is a compound in which the first constituent and the second constituent are bonded through an ester bond, ketone bond, amide bond, ether bond or siloxane bond.

12. The electrode-forming composition of 1 above, wherein the heterocycle-containing compound is a solid at normal temperature.

13. The electrode-forming composition of any of 1 to 12 above, further including a conductive additive.

14. The electrode-forming composition of any of 1 to 13 above, wherein the positive electrode active material includes at least 30 wt% of S, Fe or Ni.

15. The electrode-forming composition of any of 1 to 14 above, further including, as an additive, a polymer containing pyrrolidone structures or nitrile groups.

16. The electrode-forming composition of 15 above, wherein the polymer is at least one selected from the group consisting of polyvinyl pyrrolidone and polyacrylonitrile.

17. The electrode-forming composition of any of 1 to 16 above, wherein the first constituent and the product are included in a total amount, based on solids in the composition, of from 0.001 to 0.5 wt%.

18. An electrode layer obtained from the electrode-forming composition of any of 1 to 17 above.

19. An electrode which includes the electrode layer of 18 above.

20. A secondary battery which includes the electrode of 19 above.

21. An additive for an electrode slurry containing a positive electrode active material, a binder and a solvent, wherein the additive includes:

a product obtained by the reaction of a heterocycle-containing compound which has a nitrogen-containing five-membered ring, does not include an oxygen atom in the nitrogen-containing five-membered ring and has a reactive group (first constituent) with a compound that chemically reacts with the heterocycle-containing compound (second constituent).

22. The additive of 21 above, wherein heteroatoms included in the nitrogen-containing five-membered ring are nitrogen atoms only.
23. The additive of 22 above, wherein two or three nitrogen atoms are included in the nitrogen-containing five-membered ring.
24. The additive of 21 above, wherein the heterocycle-containing compound is represented by one of formulas (1) to (4) below

[Chem. 4]

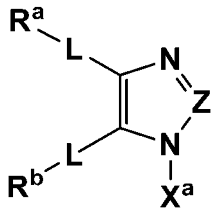

(1)

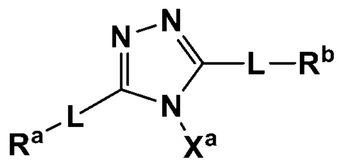

(2)

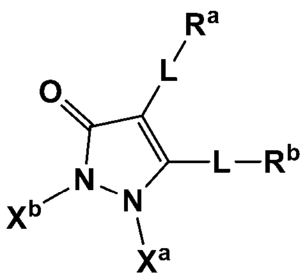

(3)

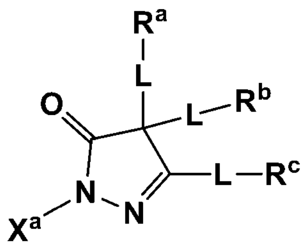

(4)

(wherein $R^a$ to $R^c$ are each independently a hydrogen atom, halogen atom, carboxyl group, hydroxyl group, thiol group, amino group, alkyl group of 1 to 6 carbon atoms which may have a substituent, alkenyl group of 2 to 6 carbon atoms which may have a substituent or aryl group of 6 to 12 carbon atoms which may have a substituent;

$R^a$ and $R^b$ may mutually bond to form a ring of 4 to 12 carbon atoms which may have a substituent;
each L is independently a single bond, carbonyl group, ether bond, ester bond or amide bond;
Z is nitrogen or C-L-$R^c$;
$X^a$ and $X^b$ are each independently a hydrogen atom, lithium atom, sodium atom, alkyl group of 1 to 6 carbon atoms which may have a substituent, aryl group of 6 to 12 carbon atoms which may have a substituent or $-CH_2NR^d{}_2$; and $R^d$ is an alkyl group of 1 to 10 carbon atoms, alkanol group of 1 to 10 carbon atoms, alkenyl group of 2 to 10 carbon atoms or aryl group of 6 to 12 carbon atoms) and has on the molecule a reactive group for reacting with the second constituent.

25. The additive of any of 21 to 24 above, wherein the heterocycle-containing compound is a solid at normal temperature.
26. The additive of any of 21 to 25 above, further including one or more selected from the group consisting of polymers containing pyrrolidone structures or nitrile groups, and solvents.
27. The additive of any of 21 to 26 above which is a gelation inhibitor.

## ADVANTAGEOUS EFFECTS OF INVENTION

The electrode-forming composition of the invention is a composition which resists thickening and gelation and thus has high shelf stability, and which can be suitably used to form a positive electrode for an energy storage device. When energy storage batteries equipped with an electrode produced using this composition are manufactured, anticipated advantages include enhanced quality and yield due to the increased shelf stability of the composition, cost reductions and

reduced environmental impact due to the higher concentration of solids, and reduced deterioration within the battery caused by alkaline constituents. Such advantages can contribute to reductions in the manufacturing costs of energy storage devices and improvements in the battery characteristics.

Although the mechanism for such thickening and gelation and the mechanism underlying the appearance of thickening and gelation-suppressing effects are unclear, in the present invention these are thought to be due to the formation of a protective film on the surface of alkaline constituents owing to the addition to the electrode-forming composition of a stabilizing ingredient comprised of a specific heterocycle-containing compound and a compound which chemically reacts with the heterocycle-containing compound. Presumably, this protective film suppresses reactions between alkaline constituents and the binder, particularly a fluorinated binder, as a result of which thickening and gelation of the composition can be suppressed, enhancing the shelf stability. Because thickening and gelation of the electrode-forming composition are suppressed, it becomes possible to form a uniform positive electrode layer. In addition, it is also possible to increase the solids concentration in the electrode slurry, enabling the cost and environmental impact of manufacturing energy storage devices to be reduced. Furthermore, corrosion by alkaline components of the aluminum foil commonly used as the current-collecting foil and deterioration of the battery characteristics due to reaction with the electrolyte solution can be suppressed. However, these are merely assumptions and so the present invention should not be construed as being limited to the foregoing mechanisms.

## DESCRIPTION OF EMBODIMENTS

The electrode-forming composition of the invention includes a stabilizing ingredient, a positive electrode active material, a binder and a solvent.

[Stabilizing Ingredient]

The stabilizing ingredient is an ingredient comprised of a heterocycle-containing compound which has a nitrogen-containing five-membered ring, does not include an oxygen atom in the nitrogen-containing five-membered ring and has a reactive group (first constituent) and a compound which chemically reacts with the heterocycle-containing compound (second constituent), and is exemplified in this invention by the following embodiments:

(1) a stabilizing ingredient that includes a heterocycle-containing compound which has a nitrogen-containing five-membered ring, does not include an oxygen atom in the nitrogen-containing five-membered ring and has a reactive group (first constituent) and a compound which chemically reacts with the heterocycle-containing compound (second constituent);

(2) a stabilizing ingredient that includes a heterocycle-containing compound which has a nitrogen-containing five-membered ring, does not include an oxygen atom in the nitrogen-containing five-membered ring and has a reactive group (first constituent), a compound which chemically reacts with the heterocycle-containing compound (second constituent), and a product obtained by reaction of the first constituent with the second constituent; and

(3) a stabilizing ingredient that includes a product obtained by the reaction of a heterocycle-containing compound which has a nitrogen-containing five-membered ring, does not include an oxygen atom in the nitrogen-containing five-membered ring and has a reactive group (first constituent) with a compound which chemically reacts with the heterocycle-containing compound (second constituent).

In this invention, the heterocycle-containing compound serving as the first ingredient is a compound which differs from the solvent in the invention, and is preferably a solid at normal temperature. In the invention, "solid at normal temperature" means that the melting point at one atmosphere is 25°C or higher.

The stabilizing ingredient is described in detail below.

<First Constituent>

The first constituent is a heterocycle-containing compound which has a nitrogen-containing five-membered ring, does not include an oxygen atom in the nitrogen-containing five-membered ring and has a reactive group. In this invention, a compound in which the heteroatoms included in the nitrogen-containing five-membered ring are nitrogen atoms only is preferred. A compound in which two or three nitrogen atoms are included in the nitrogen-containing five-membered ring is more preferred. It is even more preferable for the first constituent to be a heterocycle-containing compound which is represented by one of formulas (1) to (4) below

[Chem. 5]

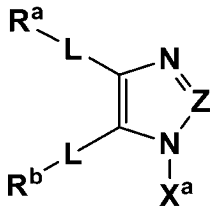

(1)

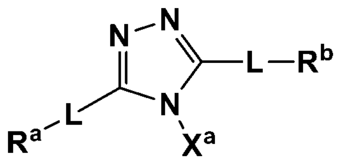

(2)

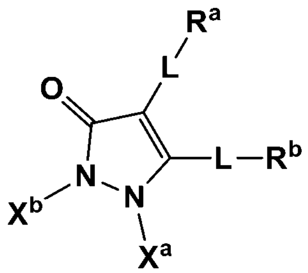

(3)

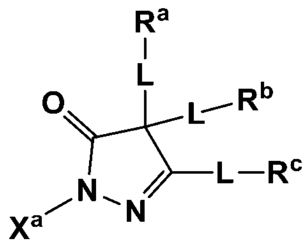

(4)

(wherein $R^a$ to $R^c$ are each independently a hydrogen atom, halogen atom, carboxyl group, hydroxyl group, thiol group, amino group, alkyl group of 1 to 6 carbon atoms which may have a substituent, alkenyl group of 2 to 6 carbon atoms which may have a substituent or aryl group of 6 to 12 carbon atoms which may have a substituent;

$R^a$ and $R^b$ may mutually bond to form a ring of 4 to 12 carbon atoms which may have a substituent;
each L is independently a single bond, carbonyl group, ether bond, ester bond or amide bond;
Z is nitrogen or C-L-$R^c$;
$X^a$ and $X^b$ are each independently a hydrogen atom, lithium atom, sodium atom, alkyl group of 1 to 6 carbon atoms which may have a substituent, aryl group of 6 to 12 carbon atoms which may have a substituent or $-CH_2NR^d{}_2$; and
$R^d$ is an alkyl group of 1 to 10 carbon atoms, alkanol group of 1 to 10 carbon atoms, alkenyl group of 2 to 10 carbon atoms or aryl group of 6 to 12 carbon atoms),

and which has on the molecule a reactive group for reacting with the second constituent.

The heterocycle-containing compounds represented by above formulas (2), (3) and (4) may be structural isomers. Specifically, isomers of heterocycle-containing compounds of formula (2) are exemplified by heterocycle-containing compounds of formulas (2-A) to (2-C) below, isomers of heterocycle-containing compounds of formula (3) are exemplified by heterocycle-containing compounds of formulas (3-A) to (3-E) below, and isomers of heterocycle-containing compounds of formula (4) are exemplified by heterocycle-containing compounds of formulas (4-A) to (4-G) below.

[Chem. 6]

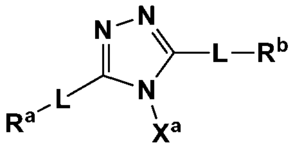
(2-A)

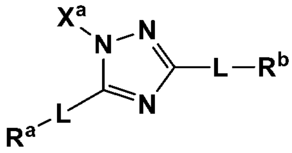
(2-B)

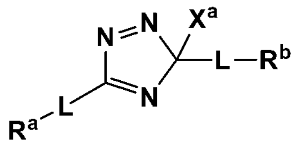
(2-C)

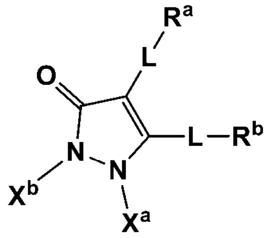
(3-A)

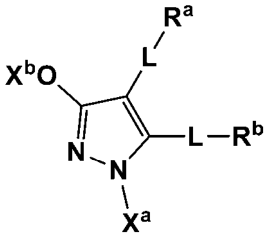
(3-B)

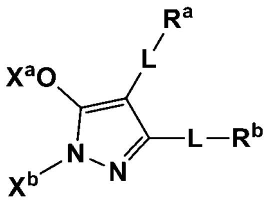
(3-C)

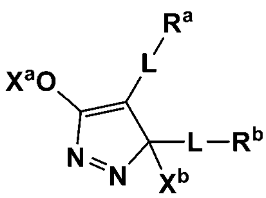
(3-D)

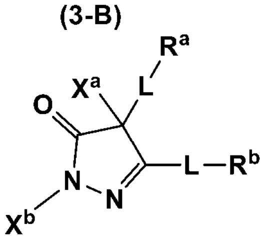
(3-E)

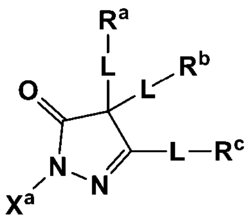
(4-A)

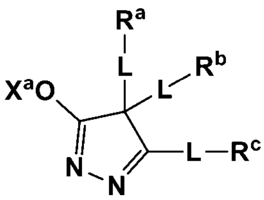
(4-B)

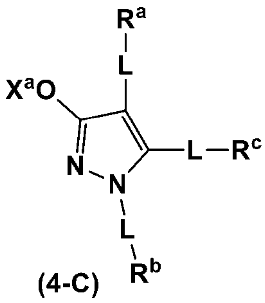
(4-C)

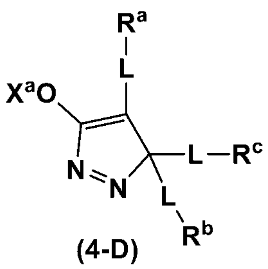
(4-D)

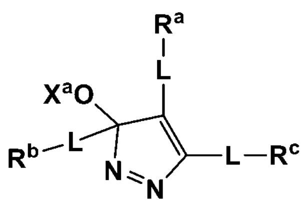
(4-E)

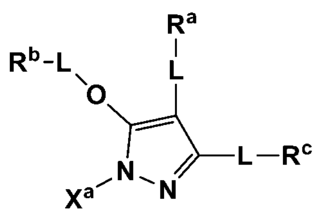
(4-F)

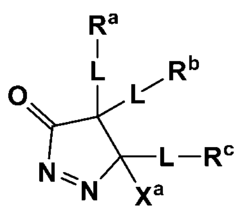
(4-G)

(In these formulas, $R^a$ to $R^c$, L, $X^a$ and $X^b$ are the same as above.)

The alkyl groups of 1 to 6 carbon atoms represented by $R^a$ to $R^c$ may be linear, branched or cyclic. Specific examples include linear or branched alkyl groups of 1 to 6 carbon atoms, such as methyl, ethyl, n-propyl, isopropyl, n-butyl, isobutyl, s-butyl, t-butyl, n-pentyl and n-hexyl groups; and cyclic alkyl groups of 3 to 6 carbon atoms, such as cyclopropyl, cyclobutyl, cyclopentyl and cyclohexyl groups.

Examples of the alkenyl groups of 2 to 6 carbon atoms represented by $R^a$ to $R^c$ include ethenyl, n-1-propenyl, n-2-propenyl, 1-methylethenyl, n-1-butenyl, n-2-butenyl, n-3-butenyl, 2-methyl-1-propenyl, 2-methyl-2-propenyl, 1-ethylethenyl, 1-methyl-1-propenyl, 1-methyl-2-propenyl and n-1-pentenyl groups.

Examples of the aryl groups of 6 to 12 carbon atoms represented by $R^a$ to $R^c$ include phenyl, tolyl, 1-naphthyl and 2-naphthyl groups.

Examples of the ring of 4 to 12 carbon atoms formed by the mutual bonding of $R^a$ and $R^b$ include cyclopentane, cyclohexane, benzene, naphthalene, triazole, pyridine and pyrazine rings.

$R^a$ to $R^c$ may have substituents. Examples of the substituents include carboxyl, hydroxyl, aldehyde, ester, ketone, amino and phenyl groups, halogen atoms and alkoxysilyl, epoxy, carbonyl chloride and thiol groups. Examples of the alkoxysilyl group include trimethoxysilyl, dimethoxymethylsilyl, methoxydimethylsilyl, triethoxysilyl, diethoxymethylsilyl and ethoxydimethylsilyl groups. In this invention, a carboxyl group is preferred. When $R^a$ to $R^c$ have substituents, the number of substituents is preferably from 1 to 6, and more preferably from 1 to 3.

It is preferable for each of $R^a$ to $R^c$ to be independently a hydrogen atom, carboxyl group, alkyl group of 1 to 6 carbon atoms which may have a substituent or aryl group of 6 to 12 carbon atoms which may have a substituent, and for $R^a$ and $R^b$ to mutually bond to form a ring of 4 to 12 carbon atoms which may have a substituent.

It is more preferable for each of $R^a$ to $R^c$ to be independently a hydrogen atom, carboxyl group, alkyl group of 1 to 6 carbon atoms which may have a substituent or aryl group of 6 to 12 carbon atoms which may have a substituent, and for $R^a$ and $R^b$ to mutually bond to form a ring of 4 to 12 carbon atoms which may have a substituent.

It is even more preferable for each of $R^a$ to $R^c$ to be independently a hydrogen atom, carboxyl group, alkyl group of 1 to 3 carbon atoms which may have a substituent or aryl group of 6 to 10 carbon atoms which may have a substituent, and for $R^a$ and $R^b$ to mutually bond to form a ring of 6 to 10 carbon atoms which may have a substituent.

It is still more preferable for each of $R^a$ to $R^c$ to be independently a hydrogen atom, carboxyl group, methyl group or phenyl group, and for $R^a$ and $R^b$ to mutually bond to form a benzene ring which may have a substituent.

L is preferably a single bond, an ester bond or an amide bond; a single bond is more preferred.

Z is preferably nitrogen.

The alkyl groups of 1 to 6 carbon atoms represented by $X^a$ and $X^b$ may be linear, branched or cyclic. Specific examples include linear or branched alkyl groups of 1 to 6 carbon atoms, such as methyl, ethyl, n-propyl, isopropyl, n-butyl, isobutyl, s-butyl, t-butyl, n-pentyl and n-hexyl groups; and cyclic alkyl groups of 3 to 6 carbon atoms, such as cyclopropyl, cyclobutyl, cyclopentyl and cyclohexyl groups.

Examples of the aryl groups of 6 to 12 carbon atoms represented by $X^a$ and $X^b$ include phenyl, tolyl, 1-naphthyl and 2-naphthyl groups.

$X^a$ and $X^b$ above may have substituents. Examples of the substituents include carboxyl, hydroxyl, aldehyde, ester, ketone, amino and phenyl groups, halogen atoms and alkoxysilyl, epoxy, carbonyl chloride and thiol groups. Examples of the alkoxysilyl group include trimethoxysilyl, dimethoxymethylsilyl, methoxydimethylsilyl, triethoxysilyl, diethoxymethylsilyl and ethoxydimethylsilyl groups. In this invention, carboxyl, amino, hydroxyl and alkoxysilyl groups are preferred; carboxyl, amino and hydroxyl groups are more preferred; carboxyl groups are even more preferred.

The alkyl group of 1 to 10 carbon atoms represented by $R^d$ may be linear, branched or cyclic. Specific examples include linear or branched alkyl groups of 1 to 10 carbon atoms, such as methyl, ethyl, n-propyl, isopropyl, cyclopropyl, n-butyl, isobutyl, s-butyl, t-butyl, n-pentyl, neopentyl, n-hexyl, n-octyl, n-nonyl and n-decyl groups; and cyclic alkyl groups of 3 to 10 carbon atoms, such as cyclopropyl, cyclobutyl, cyclopentyl, cyclohexyl and 1-adamantyl groups.

Examples of the alkanol group of 1 to 10 carbon atoms represented by $R^d$ include hydroxymethyl, hydroxyethyl, hydroxypropyl, hydroxybutyl, hydroxypentyl, hydroxyhexyl, hydroxyoctyl, hydroxynonyl and hydroxydecyl groups.

Examples of the alkenyl group of 2 to 10 carbon atoms represented by $R^d$ include ethenyl, n-1-propenyl, n-2-propenyl, 1-methylethenyl, n-1-butenyl, n-2-butenyl, n-3-butenyl, 2-methyl-1-propenyl, 2-methyl-2-propenyl, 1-ethylethenyl, 1-methyl-1-propenyl, 1-methyl-2-propenyl, n-1-pentenyl and n-1-decenyl groups.

Examples of the aryl group of 6 to 12 carbon atoms represented by $R^d$ include phenyl, tolyl, 1-naphthyl and 2-naphthyl groups.

It is preferable for each of $X^a$ and $X^b$ to be independently a hydrogen atom, lithium atom, sodium atom, alkyl group of 1 to 6 carbon atoms which may have a substituent, aryl group of 6 to 12 carbon atoms which may have a substituent or $-CH_2NR^d_2$.

It is more preferable for each of $X^a$ and $X^b$ to be independently a hydrogen atom, lithium atom, sodium atom, alkyl group of 1 to 4 carbon atoms which may have a substituent, aryl group of 6 to 10 carbon atoms which may have a substituent or $-CH_2NR^d_2$.

It is even more preferable for each of $X^a$ and $X^b$ to be independently a hydrogen atom, lithium atom, sodium atom, alkyl group of 1 to 3 carbon atoms which may have a substituent, aryl group of 6 to 8 carbon atoms which may have a substituent or $-CH_2NR^d_2$.

It is still more preferable for each of $X^a$ and $X^b$ to be independently a hydrogen atom, lithium atom, methyl group, phenyl group or $-CH_2NR^d_2$.

$R^d$ is preferably an alkyl group of 1 to 3 carbon atoms or an aryl group of 6 to 10 carbon atoms; methyl and phenyl groups are more preferred.

The heterocycle-containing compounds of formulas (1) to (4) have on the molecule a reactive group for reacting with the subsequently described second constituent. The reactive group is exemplified by those among the substituents mentioned in the descriptions of $R^a$ to $R^c$, $X^a$ and $X^b$ which have reactivity. Of the foregoing substituents, examples of groups capable of becoming reactive groups include carboxyl, hydroxyl, aldehyde, ester, ketone and amino groups, halogen atoms and alkoxysilyl, epoxy and carbonyl chloride groups. Taking into account the reactivity with the second constituent, carboxyl, amino, hydroxyl and alkoxysilyl groups are preferred; carboxyl, amino and hydroxyl groups are more preferred; a carboxyl group is even more preferred.

Although the number of the above reactive groups is not particularly limited, taking into account the electrochemical stability as a compound, the number of such reactive groups is preferably from one to three, and is more preferably one.

The above reactive group may be on any of $R^a$ to $R^c$, $X^a$ and $X^b$. However, taking into account the availability as a compound, it is preferably on at least one of $R^a$ to $R^c$, more preferably on a ring of 4 to 12 carbon atoms formed by the mutual bonding of $R^a$ and $R^b$, even more preferably on an aromatic ring of 6 to 10 carbon atoms formed by the mutual bonding of $R^a$ and $R^b$, and still more preferably on a benzene ring formed by the mutual bonding of $R^a$ and $R^b$.

The heterocycle-containing compounds of above formulas (1) to (4) are preferably heterocycle-containing compounds of formulas (1a) to (4a) below

[Chem. 7]

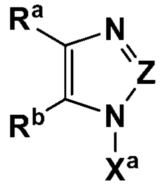

(1a)

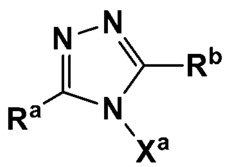

(2a)

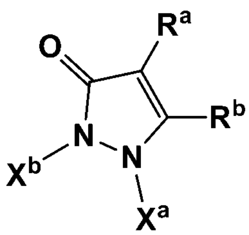

(3a)

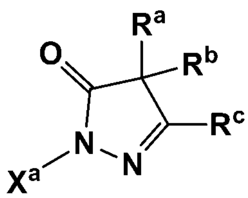

(4a)

(wherein $R^a$ to $R^c$, Z, $X^a$ and $X^b$ are the same as above).

The above heterocycle-containing compounds are more preferably heterocycle-containing compounds of formula (5) below

[Chem. 8]

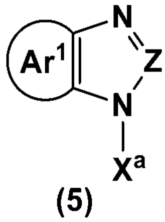

(5)

(wherein $Ar^1$ is an aromatic ring of 4 to 12 carbon atoms which may have a substituent or an aliphatic ring of 4 to 10 carbon atoms which may have a substituent, and Z and $X^a$ are the same as above).

The above heterocycle-containing compounds are even more preferably heterocycle-containing compounds of formula (6) below

[Chem. 9]

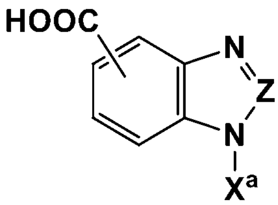

(6)

(wherein Z and $X^a$ are the same as above).

Specific examples of heterocycle-containing compounds of above formula (1) include the heterocycle-containing compounds of formulas (1-1) to (1-11) below.

[Chem. 10]

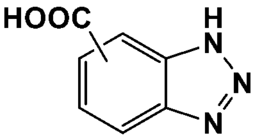

(1-1)

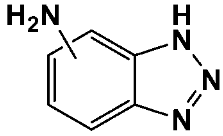

(1-2)

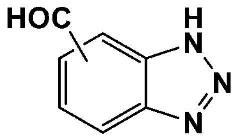

(1-3)

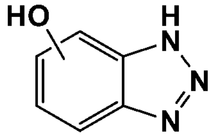

(1-4)

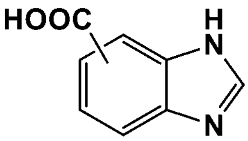

(1-5)

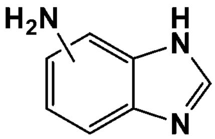

(1-6)

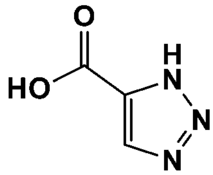

(1-7)

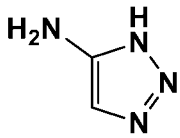

(1-8)

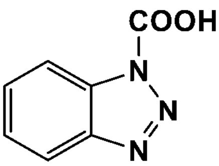

(1-9)

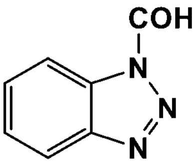

(1-10)

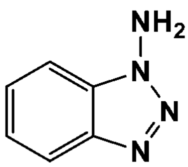

(1-11)

Specific examples of heterocycle-containing compounds of above formula (2) include the heterocycle-containing compounds of formulas (2-1) to (2-6) below.

[Chem. 11]

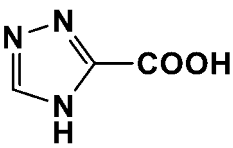

(2-1)

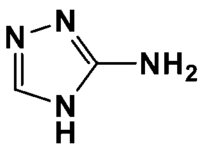

(2-2)

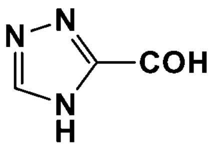

(2-3)

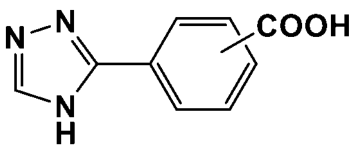

(2-4)

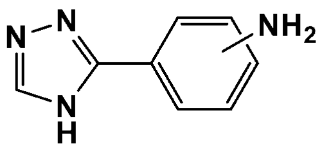

(2-5)

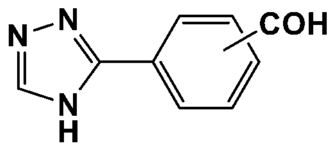

(2-6)

Specific examples of heterocycle-containing compounds of above formula (3) include the heterocycle-containing compounds of formulas (3-1) to (3-4) below.

[Chem. 12]

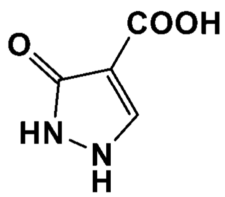
(3-1)

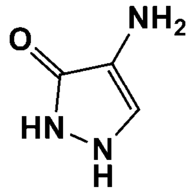
(3-2)

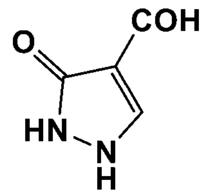
(3-3)

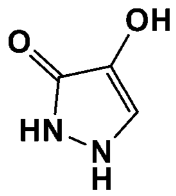
(3-4)

Specific examples of heterocycle-containing compounds of above formula (4) include the heterocycle-containing compounds of formulas (4-1) to (4-4) below.

[Chem. 13]

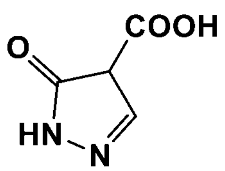
(4-1)

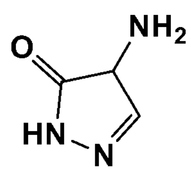
(4-2)

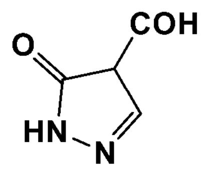
(4-3)

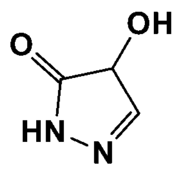
(4-4)

<Second Constituent>

The second constituent is a compound which chemically reacts with the above heterocycle-containing compound (first constituent). Examples of the above second constituent include compounds having an oxazoline group, aldehyde group, carboxyl group, hydroxyl group, amino group, alkoxysilyl group, epoxy group or carbonyl chloride group; and also lithium hydroxide, sodium hydroxide, lithium bicarbonate and lithium carbonate. Of these, compounds having an oxazoline group or an amino group, lithium hydroxide and sodium hydroxide are preferred in this invention.

The compounds having an oxazoline group, aldehyde group, carboxyl group, hydroxyl group, amino group, alkoxysilyl group, epoxy group or carbonyl chloride group may be polymers or may be compounds that are not polymers (non-polymeric compounds).

When the second constituent is a non-polymeric compound, lithium hydroxide, sodium hydroxide or a compound having a molecular weight of 200 or more is preferred. Although the molecular weight has no particular upper limit, it is generally preferable for the molecular weight to be 800 or less.

When the second constituent is a polymer, the weight-average molecular weight is preferably 1,000 or more, and more preferably 5,000 or more. Although the weight-average molecular weight has no particular upper limit, it is generally preferable for the weight-average molecular weight to be 1,000,000 or less.

Here and below, the weight-average molecular weight is a polystyrene-equivalent value obtained by gel permeation chromatography (GPC).

Specific examples of non-polymeric compounds include lithium hydroxide, sodium hydroxide, 2-(1,3-phenylene) bis-2-oxazoline (PBO), 1,3,5-tris(oxiran-2-ylmethyl)-1,3,5-triazinane-2,4,6-trione, trimesic acid, 1,2,3,4-butanetetracarboxylic acid and benzene-1,2,4,5-tetracarboxylic acid.

Specific examples of the polymer include polymers having pendant oxazoline groups (referred to below as "oxazoline polymers"), polyethyleneimine, polyallylamine, polyvinyl alcohol and polyacrylic acid.

The compounds mentioned above may be synthesized by known methods of synthesis, or may be acquired as commercial products.

Examples of commercially available oxazoline polymers include Epocros WS-300 (from Nippon Shokubai Co., Ltd.; solids concentration, 10 wt%; aqueous solution), Epocros WS-700 (from Nippon Shokubai Co., Ltd.; solids concentration, 25 wt%; aqueous solution), Epocros WS-500 (from Nippon Shokubai Co., Ltd.; solids concentration,

39 wt%; water/1-methoxy-2-propanol solution), Poly(2-ethyl-2-oxazoline (Aldrich), Poly(2-ethyl-2-oxazoline (Alfa Aesar), and Poly(2-ethyl-2-oxazoline (VWR International, LLC).

Examples of commercially available polyethyleneimines include Epomin (polyethyleneimine) SP-003, SP-006, SP-012, SP-018, SP-020 and P-1000 from Nippon Shokubai Co., Ltd.

Examples of commercially available polyallylamines include PAA-01, PAA-03, PAA-05, PAA-08, PAA-15 and PAA-25 from Nittobo Medical Co., Ltd.; and Polyment (aminoethylated acrylic polymers) NK-100PM, NM-200PM, NK-350 and NK-380 from Nippon Shokubai Co., Ltd.

Examples of commercially available polyvinyl alcohols include the V Series, VC-10, VC-13, VC-20, VF-17, VF-20, VM-17, VT-13KY, VP-18 and VP-20 from Japan Vam & Poval Co., Ltd.; Kuraray Poval 3-98, 5-98, 28-98, 60-98, 27-96, 3-88, 5-88, 22-88, 44-88, 95-88, 48-80 and L-10 from Kuraray Co., Ltd.; and Denka Poval K-05, K-17E, K-17C, H-12, H-17, H-24, B-05, B-17, B-20, B-24 and B-33 from Denka Co., Ltd.

Examples of commercially available polyacrylic acids include the Aron, Jurymer, Rheogic and Junlon series from Toagosei Co., Ltd., the Viscomate series from Showa Denko K.K., and the Aqualic series from Nippon Shokubai Co., Ltd.

The stabilizing ingredient includes as constituent elements the above-described first and second constituents. However, because these should be in a reacted state following film formation, at the composition stage, they may be present in their original state or part or all of these may have reacted and may be in the form of a product obtained by reaction of the first constituent with the second constituent.

This product is preferably a compound in which the first constituent and the second constituent are bonded via an ester bond, ketone bond, amide bond, ether bond or siloxane bond. These bonds are suitably selected according to the combination of the reactive group in the first constituent with the second constituent.

Suitable examples of products obtained by reaction of the first constituent with the second constituent include, but are not limited to, those shown below.

- Non-Polymeric:

  Lithium hydroxide neutralization products of heterocycle-containing compounds of formula (1-1)

  Reaction products of a heterocycle-containing compound of formula (1-1) with PBO

- Polymeric:

  Reaction products of a heterocycle-containing compound of formula (1-1) with an oxazoline polymer

  Reaction products of a heterocycle-containing compound of formula (1-1) with a polyethyleneimine

  Reaction products of a heterocycle-containing compound of formula (1-5) with an oxazoline polymer

The total content of the first constituent and the product is preferably from 0.001 to 4 wt%, more preferably from 0.001 to 2 wt%, even more preferably from 0.01 to 0.5 wt%, still more preferably from 0.001 to 0.3 wt%, and especially preferably from 0.001 to 0.2 wt%, of the solids. The lower limit of this total content is even more preferably 0.01 wt% of the solids. By setting the total content within the above range, adhesion between the current collector and the electrode layer can be enhanced, enabling the battery characteristics of the resulting battery to be maintained. In this invention, "solids" refers to ingredients other than the solvent which make up the composition (the same applies below).

The stabilizing ingredient of the invention can be suitably used as a gelation inhibitor for electrode slurries containing a positive electrode active material, a binder and a solvent. Also, this invention, by adding the above stabilizing ingredient to an electrode slurry, can be suitably employed as a method for suppressing the gelation of electrode slurries.

[Positive Electrode Active Material]

A material which satisfies the above conditions may be suitably selected from various types of active materials conventionally used in electrodes for secondary batteries and other energy storage devices, and used here as the positive electrode active material. For example, in the case of lithium secondary batteries and lithium-ion secondary batteries, chalcogen compounds capable of adsorbing and releasing lithium ions, lithium ion-containing chalcogen compounds, polyanionic compounds, elemental sulfur and sulfur compounds may be used. To further increase the battery capacity and also from the standpoint of the limited amount of rare metals used and the low cost, a positive electrode active material containing at least 30 wt% of S, Fe or Ni is preferred. In this invention, to further reduce the amount of rare metals used and obtain a battery having an even larger capacity, a positive electrode active material containing 30 wt% or more of nickel is more preferred, one containing 40 wt% or more of nickel is even more preferred, one containing 50 wt% or more of nickel is

still more preferred, and one containing 55 wt% or more of nickel is especially preferred. Although there is no particular upper limit, the amount of nickel included is generally 65 wt% or less.

Examples of lithium ion-containing chalcogen compounds include $LiNiO_2$, $Li_xNi_yM_{1-y}O_2$ (wherein M is one or more metal element selected from the group consisting of Co, Mn, Ti, Cr, V, Al, Sn, Pb and Zn; $0.05 \le x \le 1.10$ and $0.3 \le y \le 1.0$) and $Li_aNi_{(1-x-y)}Co_xM^1_yM^2_zO_2$ (wherein $M^1$ is one or more element selected from the group consisting of Mn and Al; $M^2$ is one or more element selected from the group consisting of Zr, Ti, Mg, B, Zr, W and V; $1.00 \le a \le 1.50$, $0.00 \le x \le 0.50$, $0 \le y \le 0.50$ and $0.000 \le z \le 0.020$).

Examples of polyanionic compounds include $LiFePO_4$, $Li_aMn_bFe_cD_dPO_4$ ($1.00 \le a \le 1.15$, $0.01 \le b \le 0.99$, $0.01 \le c \le 0.99$, $0.00 \le d \le 0.10$; D is selected from Co, Mn, Ti, Cr, V, Al, Sn, Pb and Zn; and at least a portion has an olivine structure).

Illustrative examples of sulfur compounds include sulfur, $Li_2S$, $FeS_2$, $TiS_2$, $MoS_2$ and rubeanic acid.

One of these active materials may be used alone or two or more may be used in combination.

In this invention, of the above positive electrode active materials, $Li_aNi_{(1-x-y)}Co_xM^1_yM^2_zX_wO_2$ (wherein $M^1$ is one or more element selected from the group consisting of Mn and Al; $M^2$ is one or more element selected from the group consisting of Zr, Ti, Mg, W and V; $1.00 \le a \le 1.50$, $0.00 \le x \le 0.50$, $0 \le y \le 0.50$, $0.000 \le z \le 0.020$ and $0.000 \le w \le 0.020$) is preferred. Of these active materials, one may be used alone or two or more may be used in combination.

The content of the positive electrode active material is preferably from 88.0 to 99.949 wt%, more preferably from 88.0 to 99.899 wt%, and even more preferably from 95.0 to 99.0 wt%, of the solids.

[Binder]

The binder may be suitably selected from among known materials and used, but is not particularly limited. Specific examples include fluorinated binders such as polyvinylidene fluoride (PVdF), polytetrafluoroethylene, and copolymers containing at least one monomer selected from the group consisting of vinylidene fluoride, tetrafluoroethylene and hexafluoropropylene; and nonaqueous binders such as polyimides, ethylene-propylene-diene terpolymers, styrene-butadiene rubber, polyethylene and polypropylene. In the invention, from the standpoint of enhancing the shelf stability of the composition, it is preferable to use a fluorinated binder. The fluorinated binder is preferably modified with polar functional groups such as carboxyl groups and hydroxyl groups. The polar functional groups can be confirmed by the presence or absence of distinct peaks detected in the range of 10 to 15 ppm in measurement with a nuclear magnetic resonance (NMR) spectrometer. The binder may be of one type used alone or two or more may be used in combination.

The binder has a weight-average molecular weight (Mw) which, from the standpoint of enhancing adhesion between the current collector and the electrode layer, is from 600,000 to 3,000,000, preferably from 700,000 to 2,000,000, and more preferably from 700,000 to 1,500,000.

The binder content, from the standpoint of holding down costs and obtaining a high energy density, is preferably from 0.05 to 8 wt%, more preferably from 0.05 to 5 wt%, even more preferably from 0.05 to 4 wt%, still more preferably from 0.1 to 3 wt%, yet more preferably from 0.2 to 2 wt%, and most preferably from 0.3 to 1.5 wt%, of the solids.

[Conductive Additive]

The electrode-forming composition of the invention may additionally include a conductive additive in order to further improve the electrical conductivity. Examples of the conductive additive include carbonaceous materials such as graphite, carbon black, acetylene black (AB), vapor phase-grown carbon fibers, carbon nanotubes (CNT), carbon nanohorns and graphene; and conductive polymers such as polyaniline, polypyrrole, polythiophene, polyacetylene and polyacene. From the standpoint of electrical conductivity and the ease of preparing the electrode-forming composition, it is preferable to not include graphene. The use of carbon black, acetylene black, vapor phase-grown carbon fibers, carbon nanotubes or carbon nanohorns is preferred; the use of carbon black, acetylene black or carbon nanotubes is more preferred. The conductive additive may be of one type used alone or two or more may be used in combination.

When the foregoing conductive additive is included, the content thereof, although not particularly limited, is preferably from 0.05 to 5 wt%, more preferably from 0.05 to 4 wt%, even more preferably from 0.1 to 3 wt%, and still more preferably from 0.2 to 2 wt%, of the solids. By setting the conductive additive content within the above range, a good electrical conductivity can be obtained.

[Dispersant]

The electrode-forming composition of the invention may additionally include a dispersant in order to enhance the dispersibility of the active material and the conductive additive. The dispersant may be suitably selected from substances which have hitherto been used as dispersants for conductive carbonaceous materials such as CNT, although from the standpoint of the stability within the battery including a nonionic polymer is preferred. Examples of the nonionic polymer include polyvinyl pyrrolidone (PVP) and polymers having at least one type of group selected from among nitrile, hydroxyl,

carbonyl, amino, sulfonyl and ether groups. Specific examples of such polymers include polyvinyl alcohol, polyacrylonitrile, polylactic acid, polyester, polyimide, polyphenyl ether, polyphenyl sulfone, polyethyleneimine and polyaniline. In this invention, a polymer having pyrrolidone structures or nitrile groups is preferred; polyvinyl pyrrolidone and polyacrylonitrile are more preferred. The above dispersant may be of one type used alone or two or more may be used in combination.

When a dispersant is included, the content thereof, although not particularly limited, is preferably from 0.001 to 0.5 wt%, more preferably from 0.001 to 0.3 wt%, and even more preferably from 0.001 to 0.2 wt%, of the solids. The lower limit in the dispersant content is even more preferably 0.01 wt% of the solids.

Taking into account adhesion between the electrode layer obtained and the current collector, the overall amount of the first constituent, the above product and the dispersant is preferably from 0.001 to 1 wt%, and more preferably from 0.01 to 1 wt%, of the solids.

[Solvent]

The electrode-forming composition of the invention includes a solvent. No particular limitation is imposed on the solvent, so long as it is one that has been used to date in the preparation of electrode-forming compositions. Examples include water and the following organic solvents: ethers such as tetrahydrofuran (THF), diethyl ether and 1,2-dimethoxyethane (DME); halogenated hydrocarbons such as methylene chloride, chloroform and 1,2-dichloroethane; amides such as N,N-dimethylformamide (DMF), N,N-dimethylacetamide (DMAc) and N-methyl-2-pyrrolidone (NMP); ketones such as acetone, methyl ethyl ketone, methyl isobutyl ketone and cyclohexanone; alcohols such as methanol, ethanol, n-propanol, isopropanol, n-butanol and t-butanol; aliphatic hydrocarbons such as n-heptane, n-hexane and cyclohexane; aromatic hydrocarbons such as benzene, toluene, xylene and ethylbenzene; glycol ethers such as ethylene glycol monoethyl ether, ethylene glycol monobutyl ether and propylene glycol monomethyl ether; glycols such as ethylene glycol and propylene glycol; carbonates such as ethylene carbonate, propylene carbonate, dimethyl carbonate, diethyl carbonate and methyl ethyl carbonate; and also γ-butyrolactone, dimethylsulfoxide (DMSO), dioxolane and sulfolane. One of these solvents may be used alone or two or more may be used in combination.

The above-described binder may be used after being dissolved or dispersed in these solvents.

Examples of preferred solvents in this case include water, NMP, DMSO, ethylene carbonate, propylene carbonate, dimethyl carbonate, diethyl carbonate, methyl ethyl carbonate, γ-butyrolactone, THF, dioxolane, sulfolane, DMF and DMAc. The solvent may be suitably selected according to the type of binder. In the case of a water-insoluble binder such as PVdF, NMP is suitable; in the case of a water-soluble binder, water is suitable.

The solids concentration of the inventive electrode-forming composition, which is suitably set while taking into account, for example, the coating properties of the composition and the thickness of the electrode to be formed, is generally from about 60 wt% to about 92 wt%, preferably from about 65 wt% to about 90 wt%, and more preferably from about 70 wt% to about 85 wt%.

The viscosity of the electrode-forming composition of the invention, which is suitably set while taking into account, for example, the coating method and the thickness of the electrode to be formed, is generally from about 100 mPa·s to about 2,000,000 mPa·s, preferably from about 300 mPa·s to about 1,000,000 mPa·s, and more preferably from about 400 mPa·s to about 800,000 mPa·s. This viscosity is a value measured at 25°C with a type E viscometer.

The electrode-forming composition of the invention can be obtained by mixing together the above-described ingredients. At this time, the first constituent and second constituent of the stabilizing ingredient may be compounded in this state, or a portion or all of these may be compounded as a product obtained by reacting the first constituent with the second constituent. When optional ingredients other than the additive (stabilizing ingredient) of the invention, positive electrode active material and binder are included, the additive (stabilizing ingredient) and the positive electrode active material may be mixed together with the optional ingredients or the additive and the positive electrode active material may first be mixed together and the resulting mixture then mixed with the optional ingredients. The advantageous effects of the invention can be fully manifested with either approach.

The electrode of the invention includes, on at least one side of a substrate serving as the current collector, an electrode layer made of the above-described electrode-forming composition.

The method of forming an electrode layer on a substrate is exemplified by a method in which a prepared electrode-forming composition is coated onto a substrate to form a film and the film is then dried. Various conventional known methods may be used without particular limitation as this method. Examples of coating processes include printing processes such as offset printing and screen printing, and also blade coating, dip coating, spin coating, bar coating, slit coating, inkjet coating and die coating.

During drying of the film, either air drying or drying under applied heat may be used, although drying under applied heat is preferred from the standpoint of production efficiency. When drying under applied heat, the temperature is preferably between about 50°C and about 400°C, and more preferably between about 70°C and about 150°C.

Substrates that may be used in the electrode include metal substrates of, for example, platinum, gold, iron, stainless steel, copper, aluminum or lithium; alloy substrates obtained from any combination of these metals; oxide

substrates such as indium tin oxide (ITO), indium zinc oxide (IZO) and antimony tin oxide (ATO); and carbon substrates such as glassy carbon, pyrolytic graphite and carbon felt. The substrate thickness in this invention, although not particularly limited, is preferably from 1 to 100 μm, more preferably from 3 to 30 μm, and most preferably from 5 to 25 μm.

The thickness of the electrode layer is not particularly limited, but is preferably from about 0.01 μm to about 1,000 μm, and more preferably from about 5 μm to about 300 μm. When the electrode layer is used alone as the electrode, the film thickness is preferably set to 10 μm or more.

If necessary, the electrode may be pressed. The pressing method used may be one that is commonly employed, with mold pressing and roll pressing being especially preferred. The pressure applied during pressing, although not particularly limited, is preferably 1 kN/cm or more, more preferably 2 kN/cm or more, and even more preferably 5 kN/cm or more. The applied pressure has no particular upper limit, but is preferably not more than 50 kN/cm.

The secondary battery of the invention is a secondary battery that includes the above-described electrode. More specifically, it is constructed of at least a pair of positive and negative electrodes, a separator situated between these electrodes, and an electrolyte, with the positive electrode serving as the above-described electrode. Other constituent members of battery cells may be suitably selected from among conventional known members and used.

The material used in the separator is exemplified by fiberglass, cellulose, porous polyolefin, polyamide and polyester.

The electrolyte may be either a liquid or a solid, and may be either aqueous or nonaqueous. From the standpoint of being able to readily exhibit a satisfactory practical performance, preferred use can be made of an electrolyte solution composed of, for example, an electrolyte salt and a solvent.

Examples of the electrolyte salt include lithium salts such as $LiPF_6$, $LiBF_4$, $LiN(SO_2F)_2$, $LiN(C_2F_5SO_2)_2$, $LiAsF_6$, $LiSbF_6$, $LiAlF_4$, $LiGaF_4$, $LiInF_4$, $LiClO_4$, $LiN(CF_3SO_2)_2$, $LiCF_3SO_3$, $LiSiF_6$, $LiN(CF_3SO_2)$ and $(C_4F_9SO_2)$; metal iodides such as LiI, NaI, KI, CsI and $CaI_2$; iodide salts of quaternary imidazolinium compounds; iodide salts and perchlorate salts of tetraalkylammonium compounds; and metal bromides such as LiBr, NaBr, KBr, CsBr and $CaBr_2$. One of these electrolyte salts may be used alone or two or more may be used in combination.

The solvent is not particularly limited, so long as it is not one which gives rise to corrosion or decomposition of the substances making up the battery, leading to a deterioration in performance, and it dissolves the above electrolyte salt. For example, cyclic esters such as ethylene carbonate, propylene carbonate, butylene carbonate and γ-butyrolactone; ethers such as tetrahydrofuran and dimethoxyethane; acyclic esters such as methyl acetate, dimethyl carbonate, diethyl carbonate and ethyl methyl carbonate; and nitriles such as acetonitrile may be used as nonaqueous solvents. One of these solvents may be used alone or two or more may be used in combination.

Solid inorganic electrolytes such as solid sulfide electrolytes and solid oxide electrolytes, and solid organic electrolytes such as polymer electrolytes may be suitably used as solid electrolytes. By using these solid electrolytes, it is possible to obtain a completely solid battery that does not use an electrolyte solution.

Examples of the solid sulfide electrolytes include thiosilicon-based materials such as $Li_2S$-$SiS_2$-lithium compounds (wherein the lithium compound is at least one selected from the group consisting of $Li_3PO_4$, LiI and $Li_4SiO_4$), $Li_2S$-$P_2O_5$, $Li_2S$-$B_2S_5$ and $Li_2S$-$P_2S_5$-$GeS_2$.

Examples of the solid oxide electrolytes include $Li_5La_3M_2O_{12}$ (M = Nb, Ta) and $Li_7La_3Zr_2O_{12}$, which are oxides having a garnet structure, oxoacid salt compounds based on a γ-$Li_3PO_4$ structure which are generically referred to as LISICONs, perovskite, $Li_{3.3}PO_{3.8}N_{0.22}$ generically referred to as LIPONs, and sodium/alumina.

Examples of solid polymer electrolytes include polyethylene oxide materials and polymer compounds obtained by polymerizing or copolymerizing monomers such as hexafluoropropylene, tetrafluoroethylene, trifluoroethylene, ethylene, propylene, acrylonitrile, vinylidene chloride, acrylic acid, methacrylic acid, methyl acrylate, ethyl acrylate, methyl methacrylate, styrene and vinylidene fluoride. A supporting salt and a plasticizer may be included in these solid polymer electrolytes.

An example of the supporting salt included in the solid polymer electrolyte is lithium (fluorosulfonyl imide). An example of the plasticizer is succinonitrile.

Batteries manufactured using the electrode-forming composition of the invention contain less fluorinated binder than ordinary secondary batteries, yet have high battery characteristics.

The configuration of the secondary battery and the type of electrolyte are not particularly limited. Any battery configuration, such as a lithium-ion secondary battery, nickel-hydrogen battery, manganese battery or air battery, may be used, although a lithium-ion secondary battery is preferred. The lamination method and production method are not particularly limited.

When employed in a coin cell, the above-described electrode of the invention is typically die-cut in a predetermined disk shape and used. For example, a lithium-ion secondary battery may be produced by setting one electrode on a coin cell cap to which a washer and a spacer have been welded, laying an electrolyte solution-impregnated separator of the same shape on top thereof, laying the electrode of the invention on top of the separator with the electrode layer facing down, placing a coin cell case and gasket thereon, and sealing the assembly with a coin cell crimper.

The invention provides an additive for an electrode slurry containing a positive electrode active material, a binder

and a solvent, which additive is composed of the product obtained by the reaction of a heterocycle-containing compound which has a nitrogen-containing five-membered ring, does not include an oxygen atom in the five-membered ring and has a reactive group (first constituent) with a compound which chemically reacts with the heterocycle-containing compound (second constituent). The additive can be suitably used as a gelation inhibitor for an electrode slurry containing a positive electrode active material, a binder and a solvent.

The heterocycle-containing compound serving as the first constituent is preferably a solid at normal temperature, which point was mentioned in the description of the electrode-forming composition.

The heterocycle-containing compound serving as the first constituent is preferably one in which heteroatoms included in the nitrogen-containing five-membered ring are nitrogen atoms only, more preferably one in which two or three nitrogen atoms are included in the nitrogen-containing five-membered ring, and even more preferably a heterocycle-containing compound which is represented by one of formulas (1) to (4) below

[Chem. 14]

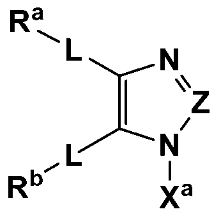

(1)

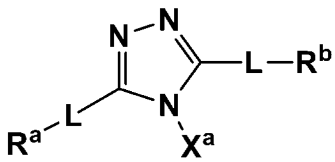

(2)

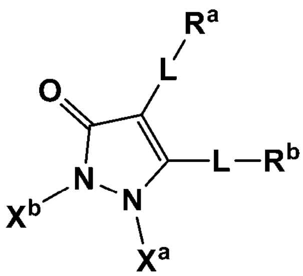

(3)

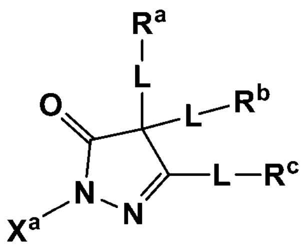

(4)

(wherein $R^a$ to $R^c$ are each independently a hydrogen atom, halogen atom, carboxyl group, hydroxyl group, thiol group, amino group, alkyl group of 1 to 6 carbon atoms which may have a substituent, alkenyl group of 2 to 6 carbon atoms which may have a substituent or aryl group of 6 to 12 carbon atoms which may have a substituent;

$R^a$ and $R^b$ may mutually bond to form a ring of 4 to 12 carbon atoms which may have a substituent;
each L is independently a single bond, carbonyl group, ether bond, ester bond or amide bond;
Z is nitrogen or C-L-$R^c$;
$X^a$ and $X^b$ are each independently a hydrogen atom, lithium atom, sodium atom, alkyl group of 1 to 6 carbon atoms which may have a substituent, aryl group of 6 to 12 carbon atoms which may have a substituent or $-CH_2NR^d{}_2$; and $R^d$ is an alkyl group of 1 to 10 carbon atoms, alkanol group of 1 to 10 carbon atoms, alkenyl group of 2 to 10 carbon atoms or aryl group of 6 to 12 carbon atoms)

and which has on the molecule a reactive group for reacting with the second constituent.

In formulas (1) to (4), specific examples of $R^a$ to $R^c$, L, $X^a$, $X^b$ and $R^d$ include the same as those mentioned in the description of the electrode-forming composition.

The additive may additionally include at least one selected from the group consisting of polymers containing pyrrolidone structures or nitrile groups, and solvents.

The polymers having pyrrolidone structures or nitrile groups are exemplified by the same polymers as mentioned above in the description of the electrode-forming composition dispersant, with polyvinyl pyrrolidone and polyacrylonitrile being preferred.

When the above polymer is included in the additive, the content thereof, although not particularly limited, is preferably from 0.001 to 0.5 wt%, more preferably from 0.001 to 0.3 wt%, and even more preferably from 0.001 to 0.2 wt%, of the solids. The lower limit in the content of the polymer is even more preferably 0.01 wt% of the solids.

The above solvent is exemplified by the same compounds as mentioned in the description of the electrode-forming composition. In this invention, of such solvents, preferred use can be made of NMP, propylene carbonate, ethylene carbonate, diethyl carbonate, dimethyl carbonate and ethyl methyl carbonate.

In cases where a solvent is included in the above additive, the heterocycle-containing compound represented by one of formulas (1) to (4) is preferably one that is dissolved or dispersed in the solvent, and more preferably one that is dissolved in the solvent.

In cases where the additive of the invention includes a solvent, the solids concentration of the additive is suitably set while taking into consideration, for example, the saturation solubility in the solvent and the shelf stability, although the concentration is generally from about 1 wt% to about 60 wt%, preferably from about 3 wt% to about 55 wt%, and more preferably from about 3 wt% to about 50 wt%.

The positive electrode active material and binder in the electrode slurry also are the same as those mentioned in the above description.

## EXAMPLES

Examples and Comparative Examples are given below to more fully illustrate the invention, although the invention is not limited by these Examples. The apparatuses used were as follows.

| | |
|---|---|
| (1) Planetary centrifugal mixer: | ARE-310 non-vacuum Thinky Mixer, from Thinky Corporation |
| (2) Dry booth: | Nihon Spindle Manufacturing Co., Ltd. |
| (3) E-type viscometer: | TV-22 viscometer, from Toki Sangyo. The viscosity 5 minutes after starting measurement under the following conditions was used: measurement temperature, 25°C; rotor, 1°34' × R24. |

The starting materials and other reagents used were as follows.

<Active Materials>

| | |
|---|---|
| NCA: | Lithium nickelate ($LiNi_{0.88}Co_{0.11}Al_{0.01}O_2$; NCA-034H, from Ecopro; Ni content, 55 wt%) |
| NCM811: | Lithium nickel manganese cobaltate ($LiNi_{0.8}Co_{0.1}Mn_{0.1}O_2$, S-800, from LinYi Gelon LIB Co., Ltd.; Ni content, 50 wt%) |

<Binder>

Solef-5140: Polyvinylidene fluoride (PVdF), from Solvay

<Conductive Additive>

AB: Denka Black® Li100 (high-purity acetylene black), from Denka Co., Ltd.

<Solvent>

NMP: from Nippon Refine Co., Ltd.

<Starting Materials>

CBT-1: 1H-1,2,3-Benzotriazole-5-carboxylic acid monohydrate, from Johoku Chemical Co., Ltd.
LiOH: from Tokyo Chemical Industry Co., Ltd.
WS-700 (oxa zoline group-containing polymer), from Nippon Shokubai Co., Ltd.; Mw, 40,000
PBO: 2-(1,3-Phenylene)bis-2-oxazoline, from Fujifilm Wako Pure Chemical Corporation
CBI: 5-Benzimidazolecarboxylic acid, from Tokyo Chemical Industry Co., Ltd.
P-1000: Polyethyleneimine; Epomin P-1000, from Nippon Shokubai Co., Ltd.; Mw, 7,000

<Additive A>

• Additives Used in Examples

A1: CBT-1/WS-700 (reaction product of CBT-1 and WS-700)
A2: CBT-1/PBO (reaction product of CBT-1 and PBO)
A3: CBI/WS-700 (reaction product of CBI and WS-700)
A4: CBT-1 (same as above)

• Additives Used in Comparative Examples

a1: 2-(2-Hydroxyphenyl)pyridine, from Fujifilm Wako Pure Chemical
a2: 1,10-Phenanthroline, from Tokyo Chemical Industry Co., Ltd.
a3: 1,8-Naphthyridine, from Tokyo Chemical Industry Co., Ltd.
a4: 4-Vinylpyridine, from Tokyo Chemical Industry Co., Ltd.
a5: Pyridine, from Fujifilm Wako Pure Chemical Corporation
a6: Poly(4-vinylpyridine), from Sigma-Aldrich
a7: Polyacrylic acid, from Toagosei Co., Ltd.; Aron AC-10P; Mw, 5,000
a8: Oxalic acid, from Fujifilm Wako Pure Chemical Corporation
a9: Phenylboronic acid, from Cangzhou Pure Science Co., Ltd.
a10: Benzoic acid, from Fujifilm Wako Pure Chemical Corporation
a11: Tannic acid, from Fujifilm Wako Pure Chemical Corporation
a12: Water-soluble methylolmelamine (Nikaresin S176 (triazine structure), from Nippon Carbide Industries Co., Inc.
a13: Isobam 18 (copolymer of isobutylene and maleic anhydride), from Kuraray Co., Ltd.; Mw, 300,000 to 350,000
a14: Epomin P-1000 (polyethyleneimine), from Nippon Shokubai Co., Ltd; Mw, 7,000

<Additive B>

PVP: Pitzcol K90, from DKS Co., Ltd.; Mw, 1,200,000; dispersant
PAN: H-PAN, from Dolan GmbH; Mw, 200,000; dispersant
Epomin P-1000 (polyethyleneimine), from Nippon Shokubai Co., Ltd; Mw, 7,000; reactive crosslinking agent

[1] Synthesis of Additives

[Synthesis Example 1] Synthesis of Additive A1 (CBT-1/WS-700)

WS-700 (40.39 g; solids content, 25 wt%), 7.45 g of 1H-1,2,3-benzotriazole-5-carboxylic acid and 465.5 g of NMP were mixed together in a flask and, using a vacuum distillation apparatus and an oil bath, the flask contents were mixed for 2.5 hours at 85°C and an internal pressure of 20 Torr. Next, one hour of vacuum distillation was carried out at 120°C and 20 Torr, and 2.91 g of NMP was added, thereby giving a 5 wt% NMP solution of CBT-1/WS-700.

[Synthesis Example 2] Synthesis of Additive A2 (CBT-1/PBO)

2-(1,3-Phenylene)bis-2-oxazoline (PBO; 7.97 g), 13.35 g of 1H-1,2,3-benzotriazole-5-carboxylic acid and 418.71 g of NMP were mixed together in a flask, and the flask contents were mixed for 3 hours at 85°C and normal pressure. Using a vacuum distillation apparatus, vacuum distillation was carried out at 85°C and 20 Torr for 2.5 hours, at 120°C and 50 Torr for 2 hours and at 120°C and 20 Torr for 0.3 hour, after which 52.47 g of NMP was added, giving a 5 wt% NMP solution of CBT-1/PBO.

[Synthesis Example 3] Synthesis of Additive A3 (CBI/WS-700)

WS-700 (27.45 g; solids content, 25 wt%), 4.53 g of 5-benzimidazolecarboxylic acid and 301.5 g of NMP were mixed together in a flask and, using a vacuum distillation apparatus, the flask contents were mixed for 3.5 hours at 120°C and 250 Torr. Vacuum distillation was then carried out at 120°C and 150 Torr for 0.5 hour, at 120°C and 50 Torr for 0.5 hour, and at 120°C and 20 Torr for 0.5 hour, after which 43.61 g of NMP was added, giving a 5 wt% NMP solution of CBT-1/PBO.

[2] Preparation of Positive Electrode Compositions (Electrode Slurries)

[Examples 1-1 to 1-22, Comparative Examples 1-1 to 1-21]

NMP solutions (5 wt%) of each additive were prepared. A 7 wt% NMP solution of PVdF was prepared. Within a dry booth, the positive electrode active material, binder solution, conductive additive, additive A solution, additive B solution, NMP and water were mixed together such as to arrive at the compositional ratios shown in Tables 1 to 3; mixture was carried out using a planetary centrifugal mixer, thereby giving electrode slurries. The total amount of slurry prepared was 20 g in each case and the slurry was adjusted so as to set the solids content to 71 wt% and the solvent composition of the slurry to NMP/$H_2O$ = 97/3 (weight ratio). The water was added in order to deliberately create a high moisture state within the slurry.

Viscosity measurements of the slurries obtained as described above were carried out with an E-type viscometer immediately after slurry preparation. In addition, the slurries were visually checked for the presence or absence of gelation after 24 hours of storage at 40°C. For slurries that had not gelled, the presence/absence of a thickening and gelling tendency was checked by similarly carrying out viscosity measurements using an E-type viscometer, and the slurries were rated based on the following criteria. These evaluations are collectively presented in the tables.

<<Rating Criteria>>

○: No gelation; change in viscosity < 100%

△: No gelation, but change in viscosity ≥ 100% and thickening is pronounced

×: Composition gelled, making use in electrode formation impossible

$$\text{Change in viscosity (\%)} = ((\text{viscosity after storage} - \text{initial viscosity})/\text{initial viscosity}) \times 100$$

[Table 1]

| | Solid ingredients (wt%) | | | | | Viscosity (mPa·s) | | Change in viscosity (%) | Evaluation |
|---|---|---|---|---|---|---|---|---|---|
| | Positive electrode active material | Binder | Conductive additive | Additive A | Additive B | Same day | After storage | | |
| Example 1-1 | NCA-034-H (96.90) | So-le-f-5140 (1.50) | AB (1.50) | A1 (0.100) | - | 5,600 | 2,147 | -62 | ○ |
| Example 1-2 | NCA-034-H (96.95) | So-le-f-5140 (1.50) | AB (1.50) | A1 (0.050) | - | 5,040 | 2,109 | -58 | ○ |
| Example 1-3 | NCA-034-H (96.97) | So-le-f-5140 (1.50) | AB (1.50) | A1 (0.030) | - | 4,720 | 3,982 | -16 | ○ |
| Example 1-4 | NCA-034-H (96.99) | So-le-f-5140 (1.50) | AB (1.50) | A2 (0.010) | - | 3,453 | 2,936 | -15 | ○ |
| Example 1-5 | NCA-034-H (96.97) | So-le-f-5140 (1.50) | AB (1.50) | A2 (0.030) | - | 4,443 | 2,393 | -46 | ○ |
| Example 1-6 | NCA-034-H (96.95) | So-le-f-5140 (1.50) | AB (1.50) | A2 (0.050) | - | 4,840 | 2,524 | -48 | ○ |
| Example 1-7 | NCA-034-H (96.95) | So-le-f-5140 (1.50) | AB (1.50) | A3 (0.050) | - | 2,466 | 879 | -64 | ○ |
| Example 1-8 | NCA-034-H (96.97) | So-le-f-5140 (1.50) | AB (1.50) | A3 (0.030) | - | 2,250 | 1,341 | -40 | ○ |
| Example 1-9 | NCA-034-H (96.99) | So-le-f-5140 (1.50) | AB (1.50) | A3 (0.010) | - | 2,038 | 1,823 | -11 | ○ |
| Example 1-10 | NCA-034-H (96.90) | So-le-f-5140 (1.50) | AB (1.50) | A3 (0.050) | PVP (0.050) | 3,852 | 2,309 | -40 | ○ |
| Example 1-11 | NCA-034-H (96.90) | So-le-f-5140 (1.50) | AB (1.50) | A3 (0.030) | PVP (0.070) | 2,170 | 3,822 | 76 | ○ |

(continued)

| | Solid ingredients (wt%) | | | | | Viscosity (mPa·s) | | Change in viscosity (%) | Evaluation |
|---|---|---|---|---|---|---|---|---|---|
| | Positive electrode active material | Binder | Conductive additive | Additive A | Additive B | Same day | After storage | | |
| Example 1-12 | NCA-034-H (96.90) | So-le-f-5140 (1.50) | AB (1.50) | A3 (0.050) | PAN (0.050) | 3,562 | 2,993 | -16 | ○ |
| Example 1-13 | NCA-034-H (96.90) | So-le-f-5140 (1.50) | AB (1.50) | A3 (0.030) | PAN (0.070) | 3,612 | 5,510 | 53 | ○ |

[Table 2]

| | Solid ingredients (wt%) | | | | | Viscosity (mPa·s) | | Change in viscosity (%) | Evaluation |
|---|---|---|---|---|---|---|---|---|---|
| | Positive electrode active material | Binder | Conductive additive | Additive A | Additive B | Same day | After storage | | |
| Example 1-14 | NCA-034-H (96.90) | So-le-f-5140 (1.50) | AB (1.50) | A4 (0.050) | P-1000 (0.050) | 5,083 | 7,230 | 42 | ○ |
| Example 1-15 | NCA-034-H (96.98) | So-le-f-5140 (1.50) | AB (1.50) | A4 (0.010) | PBO (0.010) | 3,593 | 1,871 | -48 | ○ |
| Example 1-16 | NCA-034-H (96.98) | So-le-f-5140 (1.50) | AB (1.50) | A4 (0.010) | WS-700 (0.010) | 4,036 | 1,457 | -64 | ○ |
| Example 1-17 | NCM811-S800 (96.90) | So-le-f-5140 (1.50) | AB (1.50) | A1 (0.100) | - | 6,400 | 3,941 | -38 | ○ |
| Example 1-18 | NCM811-S800 (96.95) | So-le-f-5140 (1.50) | AB (1.50) | A1 (0.050) | - | 5,900 | 4,090 | -31 | ○ |
| Example 1-19 | NCM811-S800 (96.97) | So-le-f-5140 (1.50) | AB (1.50) | A1 (0.030) | - | 6,100 | 4,533 | -26 | ○ |
| Example 1-20 | NCM811-S800 (96.99) | So-le-f-5140 (1.50) | AB (1.50) | A1 (0.010) | - | 5,870 | 6,510 | 11 | ○ |

(continued)

| | Solid ingredients (wt%) | | | | | Viscosity (mPa·s) | | Change in viscosity (%) | Evaluation |
|---|---|---|---|---|---|---|---|---|---|
| | Positive electrode active material | Binder | Conductive additive | Additive A | Additive B | Same day | After storage | | |
| Example 1-21 | NCM811-S800 (96.90) | So-le-f-5140 (1.50) | AB (1.50) | A1 (0.030) | PVP (0.070) | 3,509 | 2,598 | -26 | ○ |
| Example 1-22 | NCM811-S800 (96.90) | So-le-f-5140 (1.50) | AB (1.50) | A1 (0.030) | PAN (0.070) | 3,530 | 3,480 | -1 | ○ |

[Table 3]

| | Solid ingredients (wt%) | | | | | Viscosity (mPa·s) | | Change in viscosity (%) | Evaluation |
|---|---|---|---|---|---|---|---|---|---|
| | Positive electrode active material | Binder | Conductive additive | Additive A | Additive B | Same day | After storage | | |
| Comparative Example 1-1 | NCA-034-H (97.00) | So-le-f-5140 (1.50) | AB (1.50) | - | - | 3,038 | Gelled | - | × |
| Comparative Example 1-2 | NCA-034-H (96.90) | So-le-f-5140 (1.50) | AB (1.50) | - | PAN (0.100) | 3,310 | Gelled | - | × |
| Comparative Example 1-3 | NCA-034-H (96.90) | So-le-f-5140 (1.50) | AB (1.50) | - | PVP (0.100) | 2,234 | Gelled | - | × |
| Comparative Example 1-4 | NCA-034-H (96.99) | So-le-f-5140 (1.50) | AB (1.50) | a1 (0.010) | - | 2,502 | Gelled | - | × |
| Comparative Example 1-5 | NCA-034-H (96.99) | So-le-f-5140 (1.50) | AB (1.50) | a2 (0.010) | - | 2,509 | Gelled | - | × |
| Comparative Example 1-6 | NCA-034-H (96.99) | So-le-f-5140 (1.50) | AB (1.50) | a3 (0.010) | - | 2,426 | Gelled | - | × |
| Comparative Example 1-7 | NCA-034-H (96.99) | So-le-f-5140 (1.50) | AB (1.50) | a4 (0.010) | - | 2,784 | Gelled | - | × |

(continued)

| | Solid ingredients (wt%) | | | | | Viscosity (mPa·s) | | Change in viscosity (%) | Evaluation |
|---|---|---|---|---|---|---|---|---|---|
| | Positive electrode active material | Binder | Conductive additive | Additive A | Additive B | Same day | After storage | | |
| Comparative Example 1-8 | NCA-034-H (96.99) | So-le-f-5140 (1.50) | AB (1.50) | as (0.010) | - | 2,336 | 10,480 | 349 | △ |
| Comparative Example 1-9 | NCA-034-H (96.99) | So-le-f-5140 (1.50) | AB (1.50) | a6 (0.010) | - | 2,200 | 10,510 | 378 | △ |
| Comparative Example 1-10 | NCA-034-H (96.99) | So-le-f-5140 (1.50) | AB (1.50) | a7 (0.010) | - | 2,739 | 9,880 | 261 | △ |
| Comparative Example 1-11 | NCA-034-H (96.90) | So-le-f-5140 (1.50) | AB (1.50) | a8 (0.010) | - | 6,700 | 29,340 | 338 | △ |
| Comparative Example 1-12 | NCA-034-H (96.99) | So-le-f-5140 (1.50) | AB (1.50) | a9 (0.010) | - | 3,281 | Gelled | - | × |
| Comparative Example 1-13 | NCA-034-H (96.99) | So-le-f-5140 (1.50) | AB (1.50) | a10 (0.010) | - | 3,820 | 14,460 | 279 | △ |
| Comparative Example 1-14 | NCA-034-H (96.90) | So-le-f-5140 (1.50) | AB (1.50) | a7 (0.010) | PAN (0.090) | 3,612 | Gelled | - | × |
| Comparative Example 1-15 | NCA-034-H (96.90) | So-le-f-5140 (1.50) | AB (1.50) | all (0.050) | PAN (0.050) | 4,430 | 68,100 | 1,437 | △ |
| Comparative Example 1-16 | NCA-034-H (96.90) | So-le-f-5140 (1.50) | AB (1.50) | a12 (0.050) | PAN (0.050) | 4,186 | Gelled | - | × |
| Comparative Example 1-17 | NCA-034-H (96.90) | So-le-f-5140 (1.50) | AB (1.50) | al3 (0.050) | PAN (0.050) | 8,890 | Gelled | - | × |
| Comparative Example 1-18 | NCA-034-H (96.90) | So-le-f-5140 (1.50) | AB (1.50) | a14 (0.050) | PAN (0.050) | 12,390 | 30,000 | 142 | △ |

(continued)

| | Solid ingredients (wt%) | | | | | Viscosity (mPa·s) | | Change in viscosity (%) | Evaluation |
|---|---|---|---|---|---|---|---|---|---|
| | Positive electrode active material | Binder | Conductive additive | Additive A | Additive B | Same day | After storage | | |
| Comparative Example 1-19 | NCA-034-H (96.90) | So-le-f-5140 (1.50) | AB (1.50) | - | WS-700 (0.100) | 4,100 | Gelled | - | × |
| Comparative Example 1-20 | NCA-034-H (96.99) | So-le-f-5140 (1.50) | AB (1.50) | - | PBO (0.010) | 2,463 | 12,570 | 410 | △ |
| Comparative Example 1-21 | NCM811-S800 (97.00) | So-le-f-5140 (1.50) | AB (1.50) | - | - | 4,300 | 13,160 | 206 | △ |

The results in Tables 1 to 3 demonstrate that, in the electrode-forming compositions of the invention which include a stabilizing ingredient, thickening and gelation are suppressed and the shelf stability is enhanced.

## Claims

1. An electrode-forming composition comprising a stabilizing ingredient, a positive electrode active material, a binder and a solvent, wherein the stabilizing ingredient comprises:

   a heterocycle-containing compound which has a nitrogen-containing five-membered ring, does not include an oxygen atom in the nitrogen-containing five-membered ring and has a reactive group (first constituent) and a compound which chemically reacts with the heterocycle-containing compound (second constituent);
   the first constituent, the second constituent and a product obtained by reaction of the first constituent with the second constituent; or
   a product obtained by reaction of the first constituent with the second constituent.

2. The electrode-forming composition of claim 1, wherein heteroatoms included in the nitrogen-containing five-membered ring are nitrogen atoms only.

3. The electrode-forming composition of claim 2, wherein two or three nitrogen atoms are included in the nitrogen-containing five-membered ring.

4. The electrode-forming composition of claim 1, wherein the heterocycle-containing compound is represented by one of formulas (1) to (4) below

[Chem. 1]

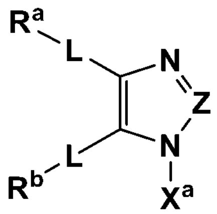

(1)

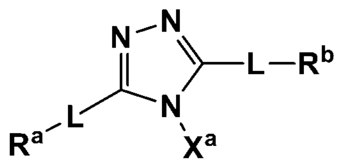

(2)

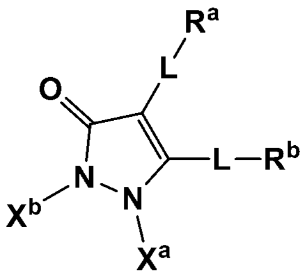

(3)

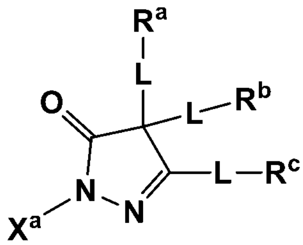

(4)

(wherein $R^a$ to $R^c$ are each independently a hydrogen atom, halogen atom, carboxyl group, hydroxyl group, thiol group, amino group, alkyl group of 1 to 6 carbon atoms which may have a substituent, alkenyl group of 2 to 6 carbon atoms which may have a substituent or aryl group of 6 to 12 carbon atoms which may have a substituent;

$R^a$ and $R^b$ may mutually bond to form a ring of 4 to 12 carbon atoms which may have a substituent;
each L is independently a single bond, carbonyl group, ether bond, ester bond or amide bond;
Z is nitrogen or C-L-$R^c$;
$X^a$ and $X^b$ are each independently a hydrogen atom, lithium atom, sodium atom, alkyl group of 1 to 6 carbon atoms which may have a substituent, aryl group of 6 to 12 carbon atoms which may have a substituent or $-CH_2NR^d{}_2$; and
$R^d$ is an alkyl group of 1 to 10 carbon atoms, alkanol group of 1 to 10 carbon atoms, alkenyl group of 2 to 10 carbon atoms or aryl group of 6 to 12 carbon atoms) and has on the molecule a reactive group for reacting with the second constituent.

**5.** The electrode-forming composition of claim 4, wherein the substituents on $R^a$, $R^b$, $R^c$, $X^a$ and $X^b$ are of at least one type selected from the group consisting of carboxyl, hydroxyl, aldehyde, ester, ketone, amino and phenyl groups, halogen atoms and alkoxysilyl, epoxy, carbonyl chloride and thiol groups.

**6.** The electrode-forming composition of claim 4, wherein the heterocycle-containing compound is a heterocycle-containing compound of formula (5) below

[Chem. 2]

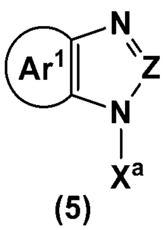

(5)

(wherein $Ar^1$ is an aromatic ring of 4 to 12 carbon atoms which may have a substituent or an aliphatic ring of 4 to 10

carbon atoms which may have a substituent; and Z and $X^a$ are the same as above).

7. The electrode-forming composition of claim 6, wherein the heterocycle-containing compound is a heterocycle-containing compound of formula (6) below

[Chem. 3]

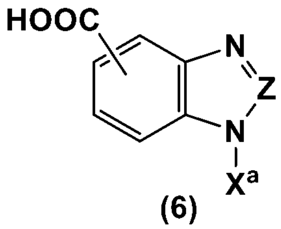

(6)

(wherein Z and $X^a$ are the same as above).

8. The electrode-forming composition of claim 4, wherein Z is nitrogen.

9. The electrode-forming composition of claim 1, wherein the second constituent is a compound having an oxazoline group, aldehyde group, carboxyl group, hydroxyl group, amino group, alkoxysilyl group, epoxy group or carbonyl chloride group; or is lithium hydroxide, sodium hydroxide, lithium bicarbonate or lithium carbonate.

10. The electrode-forming composition of claim 1, wherein the second constituent is lithium hydroxide, sodium hydroxide, a compound having a molecular weight of at least 200 or a polymer having a weight-average molecular weight of at least 1,000.

11. The electrode-forming composition of claim 1, wherein the product is a compound in which the first constituent and the second constituent are bonded through an ester bond, ketone bond, amide bond, ether bond or siloxane bond.

12. The electrode-forming composition of claim 1, wherein the heterocycle-containing compound is a solid at normal temperature.

13. The electrode-forming composition of claim 1, further comprising a conductive additive.

14. The electrode-forming composition of claim 1, wherein the positive electrode active material includes at least 30 wt% of S, Fe or Ni.

15. The electrode-forming composition of claim 1, further comprising, as an additive, a polymer containing pyrrolidone structures or nitrile groups.

16. The electrode-forming composition of claim 15, wherein the polymer is at least one selected from the group consisting of polyvinyl pyrrolidone and polyacrylonitrile.

17. The electrode-forming composition of claim 1, wherein the first constituent and the product are included in a total amount, based on solids in the composition, of from 0.001 to 0.5 wt%.

18. An electrode layer obtained from the electrode-forming composition of any one of claims 1 to 17.

19. An electrode comprising the electrode layer of claim 18.

20. A secondary battery comprising the electrode of claim 19.

21. An additive for an electrode slurry containing a positive electrode active material, a binder and a solvent, wherein the additive comprises:
a product obtained by the reaction of a heterocycle-containing compound which has a nitrogen-containing five-membered ring, does not include an oxygen atom in the nitrogen-containing five-membered ring and has a reactive group (first constituent) with a compound that chemically reacts with the heterocycle-containing compound (second constituent).

**22.** The additive of claim 21, wherein heteroatoms included in the nitrogen-containing five-membered ring are nitrogen atoms only.

**23.** The additive of claim 22, wherein two or three nitrogen atoms are included in the nitrogen-containing five-membered ring.

**24.** The additive of claim 21, wherein the heterocycle-containing compound is represented by one of formulas (1) to (4) below

[Chem. 4]

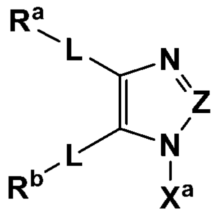

**(1)**

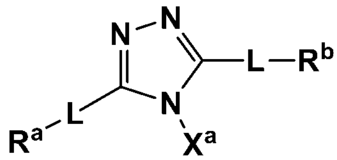

**(2)**

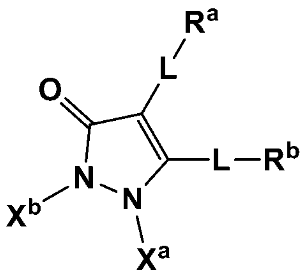

**(3)**

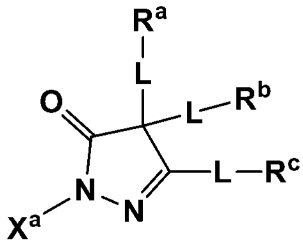

**(4)**

(wherein $R^a$ to $R^c$ are each independently a hydrogen atom, halogen atom, carboxyl group, hydroxyl group, thiol group, amino group, alkyl group of 1 to 6 carbon atoms which may have a substituent, alkenyl group of 2 to 6 carbon atoms which may have a substituent or aryl group of 6 to 12 carbon atoms which may have a substituent;

$R^a$ and $R^b$ may mutually bond to form a ring of 4 to 12 carbon atoms which may have a substituent;
each L is independently a single bond, carbonyl group, ether bond, ester bond or amide bond;
Z is nitrogen or C-L-$R^c$;
$X^a$ and $X^b$ are each independently a hydrogen atom, lithium atom, sodium atom, alkyl group of 1 to 6 carbon atoms which may have a substituent, aryl group of 6 to 12 carbon atoms which may have a substituent or $-CH_2NR^d{}_2$; and $R^d$ is an alkyl group of 1 to 10 carbon atoms, alkanol group of 1 to 10 carbon atoms, alkenyl group of 2 to 10 carbon atoms or aryl group of 6 to 12 carbon atoms) and has on the molecule a reactive group for reacting with the second constituent.

**25.** The additive of claim 21, wherein the heterocycle-containing compound is a solid at normal temperature.

**26.** The additive of claim 21, further comprising one or more selected from the group consisting of polymers containing pyrrolidone structures or nitrile groups, and solvents.

**27.** The additive of claim 21 which is a gelation inhibitor.

## INTERNATIONAL SEARCH REPORT

International application No.
**PCT/JP2024/000559**

### A. CLASSIFICATION OF SUBJECT MATTER

***H01M 4/62***(2006.01)i; ***H01M 4/139***(2010.01)i
FI: H01M4/62 Z; H01M4/139

According to International Patent Classification (IPC) or to both national classification and IPC

### B. FIELDS SEARCHED

Minimum documentation searched (classification system followed by classification symbols)

H01M4/62; H01M4/139

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2021/218803 A1 (SHENZHEN CAPCHEM TECHNOLOGY CO., LTD.) 04 November 2021 (2021-11-04) examples 14-15 | 1-2, 5, 9-10, 12-13, 18-22, 25 |
| Y | | 26 |
| X | JP 2018-502802 A (ARKEMA FRANCE) 01 February 2018 (2018-02-01) example 3 | 1-3, 5, 9-10, 12-14, 18-23, 25 |
| Y | | 15-16, 26 |
| X | CN 109686981 A (THE BATTERY RES INSTITUTE OF HENAN CO., LTD.) 26 April 2019 (2019-04-26) paragraph [0008], example 14 | 1-5, 9-10, 13-14, 17-25 |
| Y | | 15-16, 26 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 March 2024** | **26 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No.
**PCT/JP2024/000559**

C. DOCUMENTS CONSIDERED TO BE RELEVANT

| Category* | Citation of document, with indication, where appropriate, of the relevant passages | Relevant to claim No. |
|---|---|---|
| X<br><br>Y | CN 106602130 A (CN ELECT TECH NO 18 RES INST) 26 April 2017 (2017-04-26)<br>claims 1-2, paragraphs [0007]-[0010], example 3, fig. 2 | 1-6, 9, 12-14, 18-24<br><br>15-16, 26 |
| Y | JP 2014-056683 A (HITACHI MAXELL LTD.) 27 March 2014 (2014-03-27)<br>claim 1, example 1 | 15-16 |
| Y | JP 2017-054649 A (KABUSHIKI KAISHA TOYOTA JIDOSHOKKI) 16 March 2017 (2017-03-16)<br>claims 1, 5, example 1 | 15-16 |
| A | JP 2021-150147 A (HONDA MOTOR CO., LTD.) 27 September 2021 (2021-09-27)<br>entire text, all drawings | 1-27 |
| A | JP 2004-127920 A (NEC TOKIN CORP.) 22 April 2004 (2004-04-22)<br>entire text, all drawings | 1-27 |
| A | CN 110571475 A (UNIV HUAZHONG SCIENCE TECH) 13 December 2019 (2019-12-13)<br>entire text, all drawings | 1-27 |
| A | JP 09-218508 A (TORAY INDUSTRIES, INC.) 19 August 1997 (1997-08-19)<br>entire text, all drawings | 1-27 |

Form PCT/ISA/210 (second sheet) (July 2022)

**INTERNATIONAL SEARCH REPORT**
**Information on patent family members**

International application No.
**PCT/JP2024/000559**

| Patent document cited in search report | Publication date (day/month/year) | Patent family member(s) | Publication date (day/month/year) |
|---|---|---|---|
| WO 2021/218803 A1 | 04 November 2021 | CN 113555600 A | |
| JP 2018-502802 A | 01 February 2018 | US 2017/0313844 A1<br>example 3<br>WO 2016/066944 A1 | |
| CN 109686981 A | 26 April 2019 | (Family: none) | |
| CN 106602130 A | 26 April 2017 | (Family: none) | |
| JP 2014-056683 A | 27 March 2014 | (Family: none) | |
| JP 2017-054649 A | 16 March 2017 | (Family: none) | |
| JP 2021-150147 A | 27 September 2021 | US 2021/0305572 A1<br>entire text, all drawings<br>DE 102021106360 A1<br>CN 113497231 A | |
| JP 2004-127920 A | 22 April 2004 | US 2004/0029003 A1<br>entire text, all drawings<br>EP 1388906 A2 | |
| CN 110571475 A | 13 December 2019 | (Family: none) | |
| JP 09-218508 A | 19 August 1997 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H09306502 A
- JP H1079244 A
- JP 2000090917 A
- JP 2019121471 A
- JP 2006286240 A
- WO 2017034001 A1